# EUROPÄISCHE PATENTSCHRIFT

(11) **EP 3 724 526 B1**
(45) Veröffentlichungstag und Bekanntmachung des Hinweises auf die Patenterteilung: **15.09.2021**
(21) Anmeldenummer: 18829755.0
(22) Anmeldetag: 10.12.2018
(51) Int. Cl.: F16C 29/04, F16C 29/02, F16C 29/10, F16C 29/00, F16C 33/38, F16C 33/32, F16C 33/66

(54) **TELESKOPSCHIENE**
TELESCOPIC RAIL
RAIL TÉLESCOPIQUE

(30) Priorität: 15.12.2017 DE 102017130108
(43) Veröffentlichungstag der Anmeldung: 21.10.2020
(73) Patentinhaber: Accuride International GmbH, 65582 Diez/Lahn (DE)
(72) Erfinder: NEUHAUS, Christoph, 56412 Niederelbert (DE); QUIREIN, Thomas, 65582 Diez (DE)
(74) Vertreter: WSL Patentanwälte Partnerschaft mbB
(86) Internationale Anmeldenummer: PCT/EP2018/084124
(87) Internationale Veröffentlichungsnummer: WO 2019/115436

(56) Entgegenhaltungen:
- EP-A1- 1 571 357
- DE-A1-102009 014 894
- DE-A1-102011 006 745
- US-A1- 2004 047 678

## Beschreibung

Die vorliegende Erfindung betrifft eine Teleskopschiene mit einem ersten Schienenelement mit zwei Laufflächen, einem zweiten Schienenelement mit zwei Laufflächen, wenigstens einem Wälzkörperkäfig zum Positionieren einer Mehrzahl von Wälzkörpern, und einer Mehrzahl von an dem Wälzkörperkäfig aufgenommenen Wälzkörpern, wobei Abschnitte des Wälzkörperkäfigs mit den Wälzkörpern zwischen den Laufflächen der ersten und zweiten Schienenelemente angeordnet sind, so dass das erste Schienenelement und das zweite Schienenelement in einer Auszugsrichtung linear gegeneinander verschiebbar sind, wobei der Wälzkörperkäfig eine Position jedes Wälzkörpers in der Auszugsrichtung relativ zu dem Wälzkörperkäfig festlegt.

Teleskopschienen mit einem ersten Schienenelement, einem zweiten Schienenelement und einem Wälzkörperkäfig mit darin aufgenommenen Wälzkörpern zwischen den Laufflächen des ersten Schienenelements und den Laufflächen des zweiten Schienenelements sind aus dem Stand der Technik bekannt. Sie werden in unterschiedlichen Haushaltsgeräten aber auch im Automobilbau und vielen weiteren Anwendungen eingesetzt.

Um ein möglichst reibungsarmes Herausziehen und Einschieben einer Teleskopschiene, d.h. eine Verschiebebewegung zwischen dem ersten und dem zweiten Schienenelement, zu ermöglichen, sind in vielen Ausführungsformen von Teleskopschienen aus dem Stand der Technik zwischen jeweils zwei Schienenelementen Wälzkörper angeordnet, wobei die Wälzkörper bei einer Relativbewegung der Schienenelemente gegeneinander auf den Oberflächen der Schienenelemente abrollen. Eine solche Teleskopschiene ist aus US2004/047678 A1 bekannt. Die dabei entstehende Rollreibung ist geringer als eine unmittelbare Gleitreibung zwischen den Schienenelementen ohne Wälzkörper. Durch die Abrollbewegung der Wälzkörper auf den Laufflächen der beiden Schienenelemente führt eine Umdrehung des Wälzkörpers in Auszugsrichtung zu einem Verfahrweg der beiden Schienenelemente gegeneinander, dessen Länge gleich dem doppelten Umfang des Wälzkörpers in Auszugsrichtung ist.

Um eine gleichmäßige Verteilung der Wälzkörper zwischen zwei gegeneinander bewegbaren Schienenelementen zu gewährleisten, werden die Wälzkörper typischerweise in sogenannten Wälzkörperkäfigen geführt. Dabei gewährleistet ein Wälzkörperkäfig einen definierten Abstand der Wälzkörper in Auszugsrichtung voneinander. Allerdings erfordert die zuvor beschriebene Rollbewegung der Wälzkörper gleichzeitig auf den Laufflächen der beiden Maschinenelemente einen gegenüber beiden Maschinenelementen bewegbaren Kugelkäfig.

Als nachteilig erweist sich im Stand der Technik, dass die herkömmlichen Schienenelemente und Wälzkörperkäfige alle gegeneinander bewegbar ausgestaltet sein müssen. Dies erhöht die Konstruktionsanforderungen an die einzelnen Elemente der Teleskopschiene erheblich.

Es gibt daher ein Bedürfnis nach einer Teleskopschiene, welche die Nachteile der Teleskopschienen aus dem Stand der Technik vermeidet.

Zur Lösung dieser Aufgabe wird erfindungsgemäß eine Teleskopschiene der eingangs genannten Art gemäß Anspruch 1 vorgeschlagen, wobei der Wälzkörperkäfig an dem ersten Schienenelement festgelegt ist, so dass die Wälzkörper gegenüber den Laufflächen des ersten Schienenelements eine Gleitbewegung ausführen und die Wälzkörper gegenüber den Laufflächen des zweiten Schienenelements eine Gleitbewegung ausführen oder auf den Laufflächen des zweiten Schienenelements abrollen. Die erfindungsgemäße Festlegung des Wälzkörperkäfigs an dem ersten Schienenelement führt dazu, dass die Wälzkörper gegenüber den Laufflächen des ersten Schienenelements eine Gleitbewegung ausführen. In Abhängigkeit davon, wie hoch die Reibung zwischen den Wälzkörpern und dem Wälzkörperkäfig sowie zwischen den Wälzkörper und der Laufflächen des ersten Schienenelements ist, werden die Wälzkörper gegenüber den Laufflächen des zweiten Schienenelements eine Gleitbewegung ausführen oder auf den Laufflächen des zweiten Schienenelements abrollen. Eine Abrollbewegung auf dem zweiten Schienenelement hat den Vorteil, dass eine solche die Gesamtreibung bei der Verschiebebewegung der beiden Schienenelemente gegeneinander reduziert.

Überraschend ist, dass eine Festlegung des Wälzkörperkäfigs, obwohl sie zu einer Gleitbewegung der Wälzkörper zumindest gegenüber den Laufflächen des ersten Schienenelements führt, dennoch eine Reduzierung der Gesamtreibung bei der Verschiebebewegung bewirkt.

Die Festlegung des Wälzkörperkäfigs an dem ersten Schienenelement führt dazu, dass die konstruktiven Anforderungen an die beiden Schienenelemente und den Wälzkörperkäfig reduziert sind, da keine Relativbewegung des Wälzkörperkäfigs gegenüber beiden Schienenelementen gleichzeitig gewährleistet werden muss.

Wenn im Sinne der vorliegenden Anmeldung von einer Teleskopschiene die Rede ist, so ist dieser Begriff derart allgemein zu verstehen, dass nicht nur Schienen davon umfasst sind, bei welchen das erste Schienenelement und das zweite Schienenelement in etwa die gleiche Länge aufweisen, sondern auch Linearführungen, bei denen das erste Schienenelement deutlich kürzer ist als das zweite Schienenelement.

Wenn in der vorliegenden Anmeldung davon die Rede ist, dass die Teleskopschiene ein erstes Schienenelement und ein zweites Schienenelement aufweist, so schließt dies nicht aus, dass die Teleskopschiene weitere Schienenelemente, insbesondere zum Bereitstellen eines Vollauszugs, umfasst.

Unter einem Wälzkörper im Sinne der vorliegenden Anmeldung wird ein Rotationskörper verstanden, der als Element einer Führung die Reibung zwischen den verschiedenen Schienenelementen erheblich reduziert und damit eine Relativbewegung zweier Schienen zueinander erleichtert. Wälzkörper sind beispielsweise Kugeln, Rollen, Tonnen, Nadeln oder Kegel.

In einer Ausführungsform der vorliegenden Erfindung sind die Wälzkörper Kugeln. Es versteht sich, dass in diesem Fall der Wälzkörperkäfig ein Kugelkäfig ist.

In einer Ausführungsform der Erfindung weist der Wälzkörperkäfig mindestens zwei Aufnahmeschenkel mit Durchbrechungen für die Wälzkörper auf. Die Wälzkörper selbst sind dann an dem Wälzkörperkäfig in den Durchbrechungen der Aufnahmeschenkel aufgenommen.

In einer weiteren Ausführungsform weist der Wälzkörperkäfig mindestens einen die zwei Aufnahmeschenkel verbindenden Verbindungsabschnitt auf. Dieser bestimmt in einer Ausführungsform im Wesentlichen die Breite des Wälzkörperkäfigs.

Es versteht sich, dass die Aufnahmeschenkel des Wälzkörperkäfigs sich als Abschnitte des Wälzkörperkäfigs zwischen den Laufflächen der ersten und zweiten Schienenelemente erstrecken.

In einer Ausführungsform der Erfindung ist der Wälzkörperkäfig aus einem Material gefertigt, das ausgewählt ist aus einer Gruppe bestehend aus Aluminiumblech, Stahlblech, Edelstahl oder Kunststoff.

Als besonders geeignet hat sich Kunststoff erwiesen, da bei der Verwendung von Wälzkörpern aus einem Metall, vorzugsweise aus Stahl, ein Wälzkörperkäfig aus Kunststoff die Reibung zwischen den Wälzkörpern und dem Wälzkörperkäfig reduziert.

In einer Ausführungsform der Erfindung umfasst der Wälzkörperkäfig einen Schmierstoff, wobei der Schmierstoff insbesondere im Bereich eines Eingriffs zwischen zumindest einem der Wälzkörper und dem Wälzkörperkäfig angeordnet ist, so dass der Wälzkörper den Schmierstoff auf die Laufflächen der beiden Schienenelemente überträgt.

In einer weiteren Ausführungsform ist zumindest einer der Wälzkörper aus Graphit hergestellt oder weist eine Beschichtung aus Graphit oder in das Material des Wälzkörpers eingebrachtes Graphit auf.

Es hat sich herausgestellt, dass es möglich ist, Wälzkörper aus Graphit herzustellen, die ganz ähnlich wie Wälzkörper aus harten Materialien, wie z.B. Stahl, von dem Wälzkörperkäfig geführt zwischen zwei Schienenelementen ablaufen und dabei einen gewissen Materialabtrag erfahren, welcher als Graphitschmierung auf den Laufflächen der Schienenelemente den Lauf der härteren Wälzkörper zwischen den Schienenelementen schmiert.

Die derart bewirkte Schmierung erweist sich als sehr dauerhaft wenn zumindest ein Wälzkörper vollständig aus Graphit gefertigt ist und der Abtrag des Graphitmaterials nur in vergleichsweise geringen Mengen erfolgt.

Die Festlegung des Wälzkörperkäfigs an dem ersten Schienenelement ermöglicht die Ausstattung des Wälzkörperkäfigs mit weiteren Funktionen.

Daher ist in einer Ausführungsform der Erfindung zwischen zumindest einer der Laufflächen des ersten Schienenelements und zumindest einer der Laufflächen des zweiten Schienenelements ein Bremskörper angeordnet, welcher an dem Wälzkörperkäfig festgelegt ist und welcher bei einer Auszugsbewegung des ersten Schienenelements gegenüber dem zweiten Schienenelement eine Gleitbewegung auf der Lauffläche des zweiten Schienenelements ausführt.

In einer Ausführungsform der Erfindung ist der Bremskörper federnd gegen die Lauffläche des zweiten Schienenelements vorgespannt. Die Bremswirkung des Bremskörpers hängt dann unter anderem von der federnden Vorspannung ab. In einer Ausführungsform erfolgt die federnde Vorspannung in einer Richtung senkrecht zur Auszugsrichtung.

In einer Ausführungsform der Erfindung ist der Bremskörper einstückig mit dem Wälzkörperkäfig ausgestaltet, wobei der Bremskörper federnd biegbar ausgestaltet ist. In einer solchen Ausführungsform kann die federnde Vorspannung des Bremskörpers gegen die Lauffläche des zweiten Schienenelements bereits durch das Material des Wälzkörperkäfigs und des Bremskörpers selbst bereitgestellt werden. Wobei dies nicht ausschließt, dass zusätzlich noch ein Federelement zwischen dem Bremskörper und dem ersten Schienenelement, vorzugsweise jedoch zwischen dem Bremskörper und dem Wälzkörperkäfig, vorgesehen ist, welches eine zusätzliche federnde Vorspannung des Bremskörpers auf die Lauffläche des zweiten Schienenelements hin bewirkt.

In einer Ausführungsform ist der Bremskörper in einer Richtung senkrecht zu der Auszugsrichtung federnd biegbar ausgestaltet.

In einer Ausführungsform der Erfindung weist das Bremselement in einer Richtung senkrecht zu der Auszugsrichtung einen teilkreisbogenförmigen Innenquerschnitt auf. In dieser Ausführungsform wird der Bremskörper im Wesentlichen von einem Mantelabschnitt eines Hohlzylinders gebildet, wobei der Mantelabschnitt mit dem Material des Wälzkörperkäfigs, vorzugsweise einstückig, verbunden ist.

In einer Ausführungsform der Erfindung ist in dem Innenquerschnitt des Bremskörpers ein Federelement angeordnet, das den Bremskörper federnd in Richtung der Lauffläche des zweiten Schienenelements vorspannt.

Ein derartiges Federelement kann beispielsweise ein elastischer Polymerkörper sein.

In einer Ausführungsform jedoch ist das Federelement eine Spiralfeder. In einer weiteren Ausführungsform weist die Spiralfeder eine Längsachse auf, wobei sich die Längsachse im Wesentlichen parallel zu der Auszugsrichtung erstreckt. In einer solchen Ausführungsform wird die federnde Wirkung der Spiralfeder in radialer Richtung und nicht axialer Richtung genutzt.

In einer Ausführungsform der Erfindung weist der Wälzkörperkäfig zur Festlegung an dem ersten Schienenelement einen Vorsprung auf, der in eine Ausnehmung in dem ersten Schienenelement eingreift. Auch eine vertauschte Anordnung, bei welcher der Vorsprung an dem ersten Schienenelement vorgesehen ist und die Ausnehmung an dem Wälzkörperkäfig, ist denkbar.

In einer weiteren Ausführungsform ist das erste Schienenelement eine Innenschiene und das zweite Schienenelement ist eine Außenschiene. Dabei wird im Sinne der vorliegenden Anmeldung unter einer Außenschiene das Schienenelement verstanden, dessen Laufflächen zueinander hin zeigen, während unter einer Innenschiene das Schienenelement verstanden wird, dessen Laufflächen voneinander weg zeigen.

Weitere Merkmale, Vorteile und Anwendungsmöglichkeiten der erfindungsgemäßen Teleskopschiene werden anhand der folgenden Beschreibung einer Ausführungsform davon sowie der beigefügten Figuren deutlich.
- Figur 1: zeigt eine perspektivische teilweise transparente und weggebrochene Ansicht einer Teleskopschiene gemäß einer Ausführungsform der vorliegenden Erfindung.
- Figur 2: zeigt eine weggebrochene Explosionsansicht der Teleskopschiene aus Figur 1.
- Figur 3: zeigt eine Draufsicht auf den Kugelkäfig der Teleskopschiene aus Figuren 1 und 2.

In den Figuren sind identische Elemente mit identischen Bezugszeichen bezeichnet.

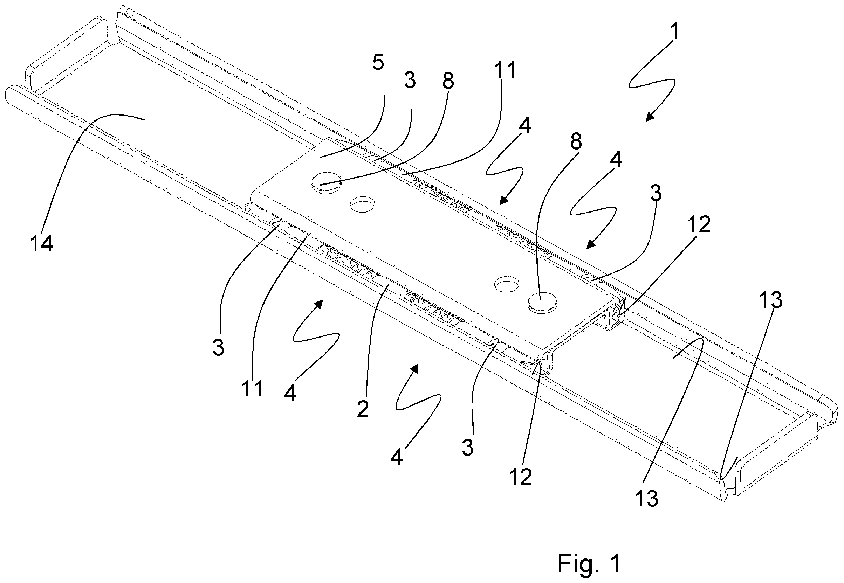

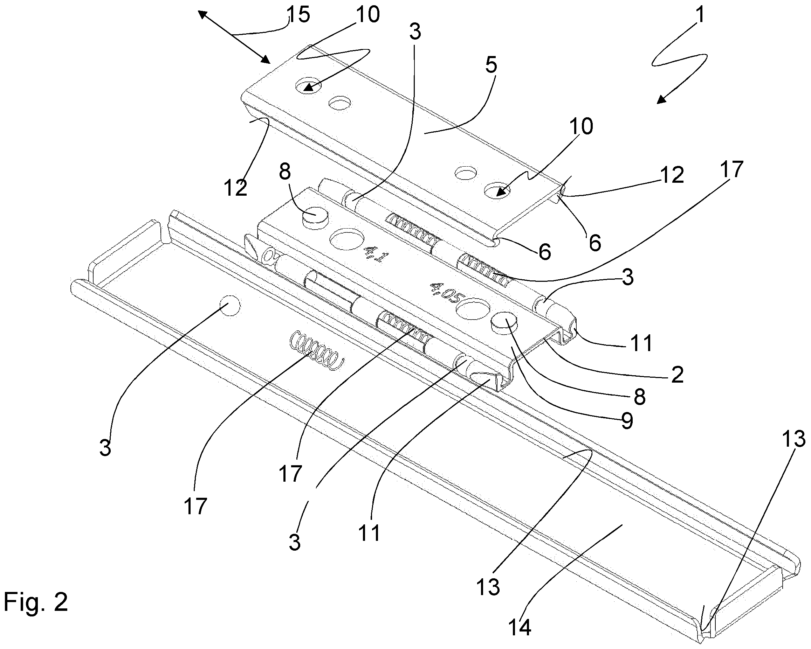

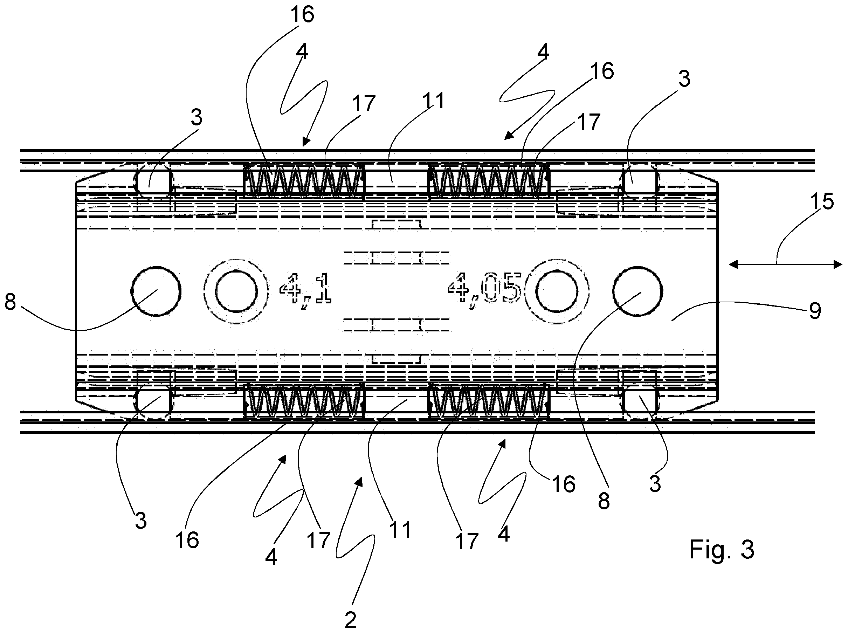

Die Figuren 1 und 2 zeigen eine Ausführungsform der erfindungsgemäßen Teleskopschiene 1, bei welcher der Kugelkäfig 2 neben der Führung der Wälzkörper in Form von Kugeln 3 auch vier Bremselemente 4 realisiert. Figur 3 zeigt den Kugelkäfig 2 der Teleskopschiene 1 aus den Figuren 1 und 2.

In der gezeigten Ausführungsform ist der Kugelkäfig 2 an der Innenschiene 5 festgelegt. Die Innenschiene 5 bildet damit das erste Schienenelement im Sinne der vorliegenden Anmeldung. In der Explosionsdarstellung aus Figur 2 ist zu erkennen, dass der Kugelkäfig 2 in die Innenschiene 5 eingeclipst ist, so dass er sich zwischen den Schenkeln 6 der Innenschiene 5, welche die Laufflächen 12 der Innenschiene 5 tragen, erstreckt. Um ein Verschieben des Kugelkäfigs 2 gegenüber der Innenschiene 5 zu verhindern, weist der Kugelkäfig 2 an seinem Verbindungsabschnitt 9 zwei Vorsprünge 8 auf, welche in zu den Vorsprüngen 8 komplementäre Ausnehmungen 10 in der Innenschiene 5 eingreifen.

Der dargestellte Kugelkäfig 2 ist in Form eines Spritzgussteils aus Kunststoff hergestellt und weist damit eine vergleichsweise geringe Reibung zwischen dem Kugelkäfig 2 und den in seinen Durchbrechungen aufgenommenen Kugeln 3 auf.

Der Kugelkäfig 2 umfasst einen Verbindungabschnitt 9, welcher die Aufnahmeschenkel 11 des Kugelkäfigs 2 verbindet. Im verbauten Zustand, welcher in Figur 1 gezeigt ist, erstrecken sich dann die Aufnahmeschenkel 11 zwischen den Laufflächen 12, 13 der Innenschiene 5 und der Außenschiene 14.

Durch das Festlegen des Kugelkäfigs 2 in Auszugsrichtung an der Innenschiene 5 führen die Kugeln 3 beim Ausziehen bzw. relativen Verschieben der beiden Schienenelemente 5, 14 zumindest gegenüber den Laufflächen 12 der Innenschiene 5 eine Gleit- bzw. Reibbewegung aus.

Da in der dargestellten Ausführungsform die Reibung der Kugeln 3 an den Aufnahmeschenkeln 11 des Kugelkäfigs 2 vergleichsweise gering ist, rollen die Kugeln auf den Laufflächen 13 der Außenschiene 14 ab. Selbst wenn jedoch die Rollbewegung der Kugeln 3 auf den Laufflächen 13 der Außenschiene 14 zumindest teilweise durch eine Gleitbewegung ersetzt würde, so würde der Kugelkäfig 2 der erfindungsgemäßen Teleskopschiene 1 dennoch eine zufriedenstellende Herabsetzung der Reibung zwischen den beiden Schienenelementen 5, 14 während einer Auszugsbewegung gewährleisten.

Der Aufbau der Bremselemente 4 ist gut in der Draufsicht aus Figur 3 ersichtlich. Die Bremselemente 4 umfassen jeweils einen Bremskörper 16, welcher im montierten Zustand mit einer Lauffläche 13 der Außenschiene 14 in Reibeingriff ist und auf dieser gleitet. Der Bremskörper 16 ist einstückig an dem Wälzkörperkäfig 2, genauer an dessen Aufnahmeschenkel 11, angespritzt. Der Bremskörper 16 wird dabei von einem federnd biegbaren Materialabschnitt gebildet.

Der federnd biegbare Materialabschnitt weist in einer Ebene senkrecht zur Auszugsrichtung 15 einen teilkreisförmigen Innenquerschnitt auf. Um die federnde Wirkung und Vorspannung des Bremskörpers 16, welche bereits durch das Ausgangsmaterial selbst bereitgestellt wird, zu unterstützen, ist im Inneren des Querschnittsprofils des Bremskörpers 16 eine Spiralfeder17 angeordnet.

Dabei erstreckt sich die Spiralfeder 17 mit ihrer Längsachse im Wesentlichen parallel zur Auszugsrichtung 15. Ausgenutzt wird die Federwirkung der Spiralfeder 17 in radialer Richtung und nicht wie sonst bei Spiralfedern üblich in axialer Richtung. Auf diese Weise lässt sich eine sehr definierte Bremswirkung des Bremskörpers 16 durch Wahl einer Spiralfeder mit entsprechendem Radius einstellen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt, sondern auf die Ansprüche.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Teleskopschiene
- 2: Kugelkäfig
- 3: Kugeln
- 4: Bremselemente
- 5: Innenschiene
- 6: Schenkel
- 8: Vorsprünge
- 9: Verbindungsabschnitt
- 10: Ausnehmungen
- 11: Aufnahmeschenkel
- 12, 13: Lauffläche
- 14: Außenschiene
- 15: Auszugsrichtung
- 16: Bremskörper
- 17: Spiralfeder

## Patentansprüche

1. Teleskopschiene (1) mit
einem ersten Schienenelement (5) mit zwei Laufflächen (12, 13),
einem zweiten Schienenelement (14) mit zwei Laufflächen (12, 13),
wenigstens einem Wälzkörperkäfig (2) zum Positionieren einer Mehrzahl von Wälzkörpern, und
einer Mehrzahl von an dem Wälzkörperkäfig (2) aufgenommenen Wälzkörpern,
wobei Abschnitte (9) des Wälzkörperkäfigs (2) mit den Wälzkörpern zwischen den Laufflächen (12, 13) der ersten (5) und zweiten (14) Schienenelemente angeordnet sind, so dass das erste Schienenelement (5) und das zweite Schienenelement (14) in einer Auszugsrichtung (15) linear gegeneinander verschiebbar sind,
wobei der Wälzkörperkäfig (2) eine Position jedes Wälzkörpers in der Auszugsrichtung (15) relativ zu dem Wälzkörperkäfig (2) festlegt,
**dadurch gekennzeichnet, dass**
der Wälzkörperkäfig (2) an dem ersten Schienenelement (5) festgelegt ist, so dass die Wälzkörper gegenüber den Laufflächen (12, 13) des ersten Schienenelements (5) eine Gleitbewegung ausführen und die Wälzkörper gegenüber den Laufflächen (12, 13) des zweiten Schienenelements (14) eine Gleitbewegung ausführen oder auf den Laufflächen (12, 13) des zweiten Schienenelements (14) abrollen.

2. Teleskopschiene (1) nach Anspruch 1, **dadurch gekennzeichnet, dass** der Wälzkörperkäfig (2) einen Kunststoff umfasst.

3. Teleskopschiene (1) nach einem der vorhergehenden Ansprüche, **dadurch gekennzeichnet, dass** der Wälzkörperkäfig (2) einen Schmierstoff umfasst.

4. Teleskopschiene (1) nach einem der vorhergehenden Ansprüche, **dadurch gekennzeichnet, dass** zumindest einer der Wälzkörper (2) Graphit aufweist oder dass zumindest einer der Wälzkörper (2) aus Graphit hergestellt ist.

5. Teleskopschiene (1) nach einem der vorhergehenden Ansprüche, **dadurch gekennzeichnet, dass** zwischen zumindest einer der Laufflächen (12, 13) des ersten Schienenelements (5) und zumindest einer der Laufflächen (12, 13) des zweiten Schienenelements(14) ein Bremskörper (16) angeordnet ist, der an dem Wälzkörperkäfig (2) festgelegt ist und der bei einer Auszugsbewegung des ersten Schienenelements (5) gegenüber dem zweiten Schienenelement (14) eine Gleitbewegung auf der Lauffläche (12, 13) des zweiten Schienenelements (14) ausführt.

6. Teleskopschiene (1) nach dem vorhergehenden Anspruch, **dadurch gekennzeichnet, dass** der Bremskörper (16) gegen die Lauffläche (12, 13) des zweiten Schienenelements (14) federnd vorgespannt ist.

7. Teleskopschiene (1) nach Anspruch 5 oder 6, **dadurch gekennzeichnet, dass** der Bremskörper (16) einstückig mit dem Wälzkörperkäfig (2) ausgestaltet ist, wobei der Bremskörper (16) federnd biegbar ausgestaltet ist.

8. Teleskopschiene (1) nach einem der Ansprüche 5 bis 7, **dadurch gekennzeichnet, dass** der Bremskörper (16) in einer Richtung senkrecht zu der Auszugsrichtung (15) einen teilkreisbogenförmigen Innenquerschnitt aufweist.

9. Teleskopschiene (1) nach dem vorhergehenden Anspruch, **dadurch gekennzeichnet, dass** zwischen dem ersten Schienenelement (5) und dem Bremskörper (16) ein Federelement angeordnet ist, das den Bremskörper (16) in Richtung der Lauffläche (12, 13) des zweiten Schienenelements (14) vorspannt.

10. Teleskopschiene (1) nach dem vorhergehenden Anspruch, **dadurch gekennzeichnet, dass** das Federelement eine Spiralfeder (17) mit einer Längsachse ist, wobei sich die Längsachse im Wesentlichen in der Auszugsrichtung (15) erstreckt.

11. Teleskopschiene (1) nach einem der vorhergehenden Ansprüche, **dadurch gekennzeichnet, dass** der Wälzkörperkäfig (2) einen Vorsprung (8) aufweist, der in eine Ausnehmung (10) in dem ersten Schienenelement (5) eingreift.

12. Teleskopschiene (1) nach einem der vorhergehenden Ansprüche, **dadurch gekennzeichnet, dass** das erste Schienenelement (5) eine Innenschiene ist und das zweite Schienenelement (14) eine Außenschiene ist.

13. Teleskopschiene (1) nach einem der vorhergehenden Ansprüche, **dadurch gekennzeichnet, dass** die Wälzkörper (3) Kugeln sind.

## Claims

1. A telescopic rail (1) comprising
a first rail element (5) with two running surfaces (12, 13),
a second rail element (14) with two running surfaces (12, 13),
at least one rolling body cage (2) for positioning a plurality of rolling bodies, and
a plurality of rolling bodies which are received at the rolling body cage (2),
wherein portions (9) of the rolling body cage (2) with the rolling bodies are arranged between the running surfaces (12, 13) of the first (5) and second (14) rail elements in such a way that the first rail element (5) and the second rail element (14) are linearly displaceable relative to each other in an extension direction (15), wherein the rolling body cage (2) establishes a position of each rolling body in the extension direction (15) relative to the rolling body cage (2),
**characterised in that**
the rolling body cage (2) is secured to the first rail element (5) so that the rolling bodies perform a sliding movement with respect to the running surfaces (12, 13) of the first rail element (5) and the rolling bodies perform a sliding movement with respect to the running surfaces (12, 13) of the second rail element (14) or roll on the running surfaces (12, 13) of the second rail element (14).

2. A telescopic rail (1) according to claim 1 **characterised in that** the rolling body cage (2) includes a plastic.

3. A telescopic rail (1) according to one of the preceding claims **characterised in that** the rolling body cage (2) includes a lubricant.

4. A telescopic rail (1) according to one of the preceding claims **characterised in that** at least one of the rolling bodies (2) has graphite or at least one of the rolling bodies (2) is made from graphite.

5. A telescopic rail (1) according to one of the preceding claims **characterised in that** arranged between at least one of the running surfaces (12, 13) of the first rail element (5) and at least one of the running surfaces (12, 13) of the second rail element (14) is a brake body (16) which is secured to the rolling body cage (2) and which upon an extension movement of the first rail element (5) with respect to the second rail element (14) performs a sliding movement on the running surface (12, 13) of the second rail element (14).

6. A telescopic rail (1) according to the preceding claim **characterised in that** the brake body (16) is resiliently prestressed against the running surface (12, 13) of the second rail element (14).

7. A telescopic rail (1) according to claim 5 or claim 6 **characterised in that** the brake body (16) is in one piece with the rolling body cage (2), the brake body (16) being of a resiliently bendable nature.

8. A telescopic rail (1) according to one of claims 5 to 7 **characterised in that** in a direction perpendicular to the extension direction (15) the brake body (16) has an internal cross-section in the form of part of a circular arc.

9. A telescopic rail (1) according to the preceding claim **characterised in that** arranged between the first rail element (5) and the brake body (16) is a spring element which prestresses the brake body (16) in the direction of the running surface (12, 13) of the second rail element (14).

10. A telescopic rail (1) according to the preceding claim **characterised in that** the spring element is a coil spring (17) having a longitudinal axis, the longitudinal axis extending substantially in the extension direction (15).

11. A telescopic rail (1) according to one of the preceding claims **characterised in that** the rolling body cage (2) has a projection (8) engaging into an opening (10) in the first rail element (5).

12. A telescopic rail (1) according to one of the preceding claims **characterised in that** the first rail element (5) is an inner rail and the second rail element (14) is an outer rail.

13. A telescopic rail (1) according to one of the preceding claims **characterised in that** the rolling bodies (3) are balls.

## Revendications

1. Rail télescopique (1) avec
un premier élément de rail (5) avec deux surfaces de roulement (12, 13),
un second élément de rail (14) avec deux surfaces de roulement (12, 13),
au moins une cage de roulement (2) pour positionner une pluralité d'éléments roulants, et
une pluralité d'éléments roulants logés au niveau de la cage de roulement (2),
dans lequel des sections (9) de la cage de roulement (2) avec les éléments roulants sont disposées entre les surfaces de roulement (12, 13) des premier (5) et second (14) éléments de rail, de sorte que le premier élément de rail (5) et le second élément de rail (14) peuvent être déplacés linéairement l'un par rapport à l'autre dans une direction d'extraction (15),
dans lequel la cage de roulement (2) définit une position de chaque élément roulant dans la direction d'extraction (15) par rapport à la cage de roulement (2), **caractérisé en ce que**
la cage de roulement (2) est fixée au premier élément de rail (5) de sorte que les éléments roulants effectuent un mouvement de glissement par rapport aux surfaces de roulement (12, 13) du premier élément de rail (5) et que les éléments roulants effectuent un mouvement de glissement par rapport aux surfaces de roulement (12, 13) du second élément de rail (14) ou roulent sur les surfaces de roulement (12, 13) du second élément de rail (14).

2. Rail télescopique (1) selon la revendication 1, **caractérisé en ce que** la cage de roulement (2) comprend une matière plastique.

3. Rail télescopique (1) selon l'une quelconque des revendications précédentes, **caractérisé en ce que** la cage de roulement (2) comprend un agent lubrifiant.

4. Rail télescopique (1) selon l'une quelconque des revendications précédentes, **caractérisé en ce qu'**au moins l'un des éléments roulants (2) présente du graphite ou **en ce qu'**au moins un des éléments roulants (2) est fabriqué en graphite.

5. Rail télescopique (1) selon l'une quelconque des revendications précédentes, **caractérisé en ce qu'**un élément de frein (16) est disposé entre au moins l'une des surfaces de roulement (12, 13) du premier élément de rail (5) et au moins l'une des surfaces de roulement (12, 13) du second élément de rail (14), qui est fixé à la cage de roulement (2) et, lors d'un mouvement d'extension du premier élément de rail (5) par rapport au second élément de rail (14), effectue un mouvement de glissement sur la surface de roulement (12, 13) du second élément de rail (14).

6. Rail télescopique (1) selon la revendication précédente, **caractérisé en ce que** l'élément de frein (16) est précontraint élastiquement contre la surface de roulement (12, 13) du second élément de rail (14).

7. Rail télescopique (1) selon la revendication 5 ou 6, **caractérisé en ce que** l'élément de frein (16) est réalisé d'un seul tenant avec la cage de roulement (2), dans lequel l'élément de frein (16) est réalisé de manière à pouvoir être courbé élastiquement.

8. Rail télescopique (1) selon l'une quelconque des revendications 5 à 7, **caractérisé en ce que** l'élément de rein (16) présente une section transversale intérieure en forme d'arc de cercle partiel dans une direction perpendiculaire à la direction d'extension (15).

9. Rail télescopique (1) selon la revendication précédente, **caractérisé en ce qu'**un élément élastique est disposé entre le premier élément de rail (5) et l'élément de frein (16), lequel élément élastique précontraint le corps de frein (16) en direction de la surface de roulement (12, 13) du second élément de rail (14).

10. Rail télescopique (1) selon la revendication précédente, **caractérisé en ce que** l'élément de ressort est un ressort hélicoïdal (17) avec un axe longitudinal, dans lequel l'axe longitudinal s'étend sensiblement dans la direction d'extension (15).

11. Rail télescopique (1) selon l'une quelconque des revendications précédentes, **caractérisé en ce que** la cage de roulement (2) présente une saillie (8) qui vient en prise dans un évidement (10) dans le premier élément de rail (5).

12. Rail télescopique (1) selon l'une quelconque des revendications précédentes, **caractérisé en ce que** le premier élément de rail (5) est un rail intérieur et le second élément de rail (14) est un rail extérieur.

13. Rail télescopique (1) selon l'une quelconque des revendications précédentes, **caractérisé en ce que** les éléments roulants (3) sont des billes.
